# EUROPÄISCHE PATENTANMELDUNG

(11) **EP 1 889 746 A1**
(43) Veröffentlichungstag der Anmeldung: **20.02.2008**
(21) Anmeldenummer: 07112921.7
(22) Anmeldetag: 23.07.2007
(51) Int. Cl.: B60Q 1/10, B60Q 1/12, B60Q 1/18

(54) **Beleuchtungssystem für Fahrzeuge**

(30) Priorität: 18.08.2006 DE 102006038915
(71) Anmelder: Hella KGaA Hueck & Co., 59552 Lippstadt (DE)
(72) Erfinder: Kalze, Franz-josef, 33428, Harsewinkel (DE); Schmidt, Christian, 33106, Paderborn (DE); Wellige, Robert, 59329, Wadersloh (DE)
(74) Vertreter: Downar, Michael

(57) **Zusammenfassung**

Die Erfindung betrifft ein Beleuchtungssystem für Fahrzeuge mit einem Frontscheinwerfer (1) für mindestens ein Hauptlichtbündel, mit einem fernbetätigbaren Leuchtweitesteller, durch den der Frontscheinwerter (1) um eine Achse (3) vertikal schwenkbar ist, und mit Leuchtmitteln (4) zur Erzeugung unterschiedlicher und zur Ergänzung des Hauptlichtbündels dienenden Kurvenlichtbündel. Die Leuchtmittel (4) zur Erzeugung unterschiedlicher Kurvenlichtbündel sind durch einen fernbetätigbaren Leuchtweitesteller (2 oder 5) um eine Achse (3) vertikal schwenkbar.

## Beschreibung

Die Erfindung betrifft ein Beleuchtungssystem für Fahrzeuge mit einem Frontscheinwerfer für mindestens ein Hauptlichtbündel, mit einem fernbetätigbaren Leuchtweitesteiler, durch den der Frontscheinwerfer um eine Achse vertikal schwenkbar ist, und mit Leuchtmitteln zur Erzeugung unterschiedlicher und zur Ergänzung des Hauptlichtbündels dienenden Kurvenlichtbündel.

Aus der DE-C-199- 23 187 ist ein Beleuchtungssystem für Fahrzeuge bekannt, bei dem ein Frontscheinwerfer für ein Hauptlichtbündel und mehrere. Leuchtmittel für unterschiedliche KuNenlichtbündel in einem gemeinsamen Gehäuse des Beleuchtungs-Systems angeordnet sind. Die LeuchtmHie! für die unterschiedlichen Kurven1.Ichtbündel sind unbeweglich zueinander in dem Gehäuse angeordnet sind, während ein Frontscheinwerfer in der Regel mittels eines fernbetätigbaren Leuchtweitereglers schwenkbar ist. Nachteilig hierbei ist, dass die Kurvenlichtbündel in den meisten Einstellungen des Frontscheinwerfers nicht optimal das Hauptlichtbündel ergänzen.

Aufgabe der Erfindung ist es, das im Oberbegriff des Anspruchs 1 beschriebene Beleuchtungssystem für Fahrzeuge derart auszubilden, dass das Beleuchtungssystem mit seinen Leuchtmitteln auch eine Fahrbahnkurve mit den unterschiedlichen Kurvenlichtbündeln besser ausleuchten kann. Diese Aufgabe wird nach der Erfindung dadurch gelöst, dass die Leuchtmittel zur Erzeugung unterschiedlicher Kurvenlichtbündel durch einen fernbetätigbaren Leuchtweitesteller um eine Achse vertikal schwenkbar sind. Dadurch ist ein automatisches Schwenken der Leuchtmittel für die Kurvenlichtbündel um eine horizontale Achse abhängig von der Beladung des Fahrzeugs möglich und die Fahrbahn ist in Kurven soweit reichend wie möglich ausgeleuchtet, ohne den Gegenverkehr in der Kurve zu blenden,

Der besondere Vorteil der Erfindung besteht darin, dass die Kurvenlichtbündel der leuchtmittel eine Hell-Dunkel-Gronze aufweisen, die bei jedem Schwenkwinkel der Leuchtmittel auf ein und demselben Niveau des Hauptlichtbündels verläuft. Dadurch ist eine möglichst weit reichende Ausleuchtung einer gerade aus verlaufenden Fahrbahn durch das Hauptlichtbündel und in der Fahrbahnkurve zusätzlich durch eines oder mehrere Kurvenlichtbündel gegeben, In diesem Zusammenhang ist es vorteilhaft, wenn die Hell-Dunkel-Grenze der Kurvenlichtbündel auf oder unterhalb dem Niveau einer Hell-Dunkel-Grenze des Hauptlichtbündels verläuft,

Nach einer bevorzugten Ausführungsform ist der fernbetätigbare Leuchtweitesteiler für den Frontscheinwerfer und die Leuchtmittel ein und derselbe, Dadurch ist das Beleuchtungssystem besonders kostengünstig herstellbar.

Nach einer Weiterbildung der Erfindung sind die Leuchtmittel für die Kurvenlichtbündel zueinander ausgerichtet oder einstellbar. Dadurch können zumindest zwei der Kurvenlichtbündel eine auf gleichen Niveau und ineinanderübergehende Hell-Dunkel-Grenze einer gemeinsamen Lichtfigur erzeugen.

Weiterhin ist es vorteilhaft, wenn die Leuchtmittel zu dem Frontscheinwerfer ausgerichtet oder einstellbar sind. Dadurch kann das Hauptlichtbünde.1 zusammen mit den Kurvenlichtbünden eine nicht von Toleranzen des Beleuchtungssystems abhängige gemeinsame Lichtfigur erzeugen.

Das Beleuchtungssystem ist einfach aufgebaut, wenn der Frontscheinwerfer und die Leuchtmittel auf einem gemeinsamen Trägerelement angebracht sind, der mittels eines einzigen Leuchtweitestellers vertikal schwenkbar ist. In diesem Zusammenhang ist es vorteilhaft, wenn das Trägerelement aus einem den Frontscheinwerfer tragenden ersten Trägerabschnitt und einem die Leuchtmittel tragenden zweiten Trägerabschnitt besteht. Dadurch können die Trägerabschnitte zu einem starren gemeinsamen Trägerelement gefügt sein und trotzdem zueinander durch eine Einstellvorrichtung ausrichtbar sein.

Bei einem bogenförmigen Verlauf der Abschlussscheibe des Beleuchtungsssystems ist es weiterhin vorteilhaft, wenn der die Leuchtmittel tragende Trägerabschnitt im Verlauf einem bogenförmigen Abschnitt einer Abschlussscheibe des Beleuchtungssystems angepasst ist. Dadurch ist eine platzsparende Anordnung des die Leuchtmittel tragenden Trägerabschnitts möglich, Hierbei ist es weiterhin vorteilhaft, wenn die Leuchtmittel bei an das Fahrzeug angebauten Beleuchtungssystem ausgehend vom Fronscheinwerfer zur Fahrzeugaußenseite hin angeordnet sind, Bei einer solchen Ausführung ist auch ein sehr enge Kurve gut ausleuchtbar.

Bei einer besonders vorteilhaften Weiterbildung der Erfindung sind die Leuchtmittel für die Kurvenlichtbündel von Leuchtdioden gebildet und ein die Leuchtdioden tragender Abschnitt des Trägerelement von einem Kühlkörper gebildet, wobei der Kühlkörper auf seiner Rückseite Kühlrippen aufweist und auf seiner Vorderseite eine Sammeloptik für die Lichtstrahlen der Leuchtdioden trägt. Justiermaßnahmen für Leuchtdioden sind wegen ihrer geringen Masse einfach und kostengünstig durchführbar,

Eine ausreichende Zahl von unterschiedlichen Kurvenlichtbündeln besteht bei der Verwendung von vier Leuchtmitteln.

Bei einer anderen Weiterbildung der Erfindung ist es vorteilhaft, wenn der Frontscheinwerfer auf einem separaten Trägerelement und die Leuchtmittel auf einem separaten Trägerelement angeordnet sind, wobei beide Trägerelemente jeweils durch einen fernbetätigbaren Leuchtweitesteller verstellbar sind. Dadurch sind die. Lichtfigur des Hauptlichtbündels und die Lichtfigur der Kurvenlichtbündel einzeln oder zusammen verstellbar.

Hierbei ist es weiterhin vorte!ihaft, wenn eine elektrische Steuer- und Sensoreinrichtung vorgesehen ist, durch die Gegenverkehr auswertbar ist und entsprechend eines Steuersignals beide Leuchtweiteregler verstellbar sind, wobei Schwenkwinke.1 von dem Frontscheinwerfer und den Leuchtmitteln individuell ermittelt sind. Dadurch ist eine genau an die. Verkehrsituation angepasste Einstellung von Hauptlichtbündel und Kurvenlichtbündeln möglich,

Bei einer anderen Weiterbildung der Erfindung ist es vorteilhaft, wenn eine elektrische Steuer- und Sensoreinrichtung vorgesehen ist, durch die der Gegenverkehr auswertbar ist und entsprechend eines Steuersignals ein Leuchtweitesteller verstellbar ist.

Dadurch können der Frontscheinwerfer, die. Leuchtmittel oder der Frontscheinwerfer und die Leuchtmittel zusammen automatisch so eingestellt werden, dass eine Blendung für den Gegenverkehr vermeidbar ist.

Anhand der beigefügten Zeichnungen wird die Erfindung nachfolgend näher erläutert. Dabei zeigt:
- Fig. 1: in einer Vorderansicht ein Beleuchlungssystem für Fahrzeuge, bei dem in einem Gehäuse ein Frontscheinwerfer für ein Hauptlichtbündel und vier Leuchtmittel für Kurvenlichtbündel angeordnet sind,
- Fig. 2: in einer Skizze das Beleuchtungssystem nach Figur 1, wobei der Frontscheinwerfer und die Leuchtmittel jeweils durch einen automatischen Leuchtweitesteller vertikal verstellbar sind, und
- Fig. 3: in einer Skizze das Beleuchtungssystem nach Figur 1, wobei der Frontscheinwerfer und die. Leuchtmittel zusammen durch einen einzigen Leuchtweitesteller vertikal verstellbar sind.

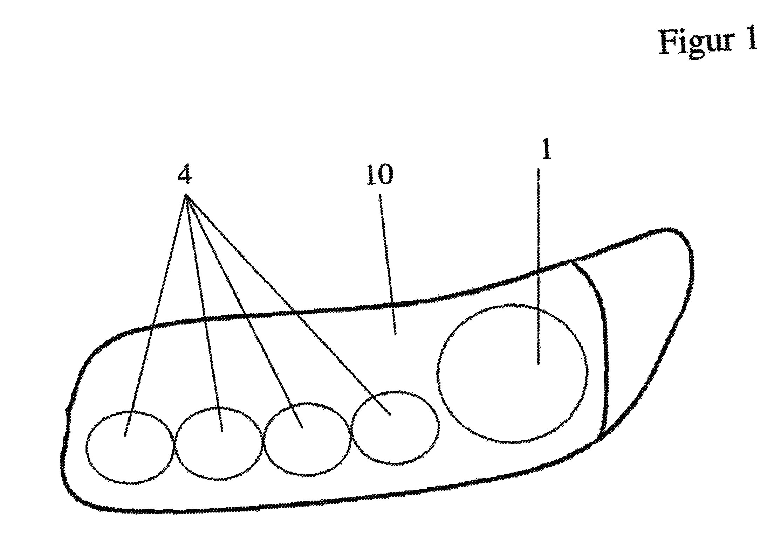

Das Beleuchtungssystem nach Figur 1 weist einen Frontscheinwerfer 1 und vier nebeneinander angeordnete Leuchtmittel 4 auf. Der Frontscheinwerfer 1 und die Leuchtmittel. 4 sind hinter einer gemeinsamen Abschlussscheibe 11 angeordnet Die Abschlussscheibe 11 verschließt die vordere Öffnung eines Gehäuses (nicht dargestellt), in das der Frontscheinwerfer 1 und die Leuchtmittel 4 eingesetzt sind, Der Frontscheinwerfer 1 dient zur Erzeugung mindestens eines Hauptlichtbündels, wie zum Beispiel asymmetrisches oder symmetrisches Abblendlicht und/oder Fernlicht. Der Frontscheinwerfer kann aus einem Lichtmodul mehrere abgeblendete Lichtfunktionen und/oder Fernlichtfunktion erzeugen oder aus mehreren einzelnen Lichtmodulen bestehen. Die Leuchtmittel 4 dienen zur Erzeugung unterschiedlicher Kurvenlichtbündel. Das Beleuchtungssystem umfasst auch eine Steuereinrichtung, die in Abhängigkeit von der Fahrsituation die einzelnen Leuchtmittel 4 unabhängig voneinander zu- oder abschaltet, Dabei besteht immer eine gemeinsame zusammenhängende Lichtfigur.

Durch eine entsprechende Ausrichtung der einzelnen Kurvenlichtbündel und zeitliche Ansteuerung der sie erzeugenden Leuchtmittel 4 lässt sich erreichen, dass das durch die Kurvenlichtbündel gebildete Kurvenlicht sich fächerartig vom Hauptlichtbündel ausgehend in Einschlagrichtung des Lenkrades ausdehnt, ohne dass damit eine Abschwächung eines Hauptlichtbündels und vor allem eines Abblendlichtbündels besteht. Eine optimale Anpassung der Lichtverteilung an die Fahrsituation, insbesondere an den Ort und die Geschwindigkeit des Kraftfahrzeugs in Abhängigkeit vom Kurvenverlauf, setzt voraus, dass die Fahrsituation ausreichend genau ermittelt wird. Hierzu kann es beispielsweise zweckmäßig sein, das Signal eines Drehwinkelsensors der Steuereinrichtung zuzuführen. Ein solcher Drehwinkelsensor ist in vielen Kraftfahrzeugen ohnehin vorhanden, so dass hierfür keine zusätzlichen Kosten entstehen. Zusätzlich unterstützt oder sogar ersetzt werden kann ein solcher Drehwinkelsensor durch eine Videokamera zur Straßenverlaufserkennung, die im Frontbereich des Kraftfahrzeugs angeordnet ist. Möglich ist außerdem, die Daten eines Fahrzeug-Navigationssystems zu diesem Zweck verwerten.

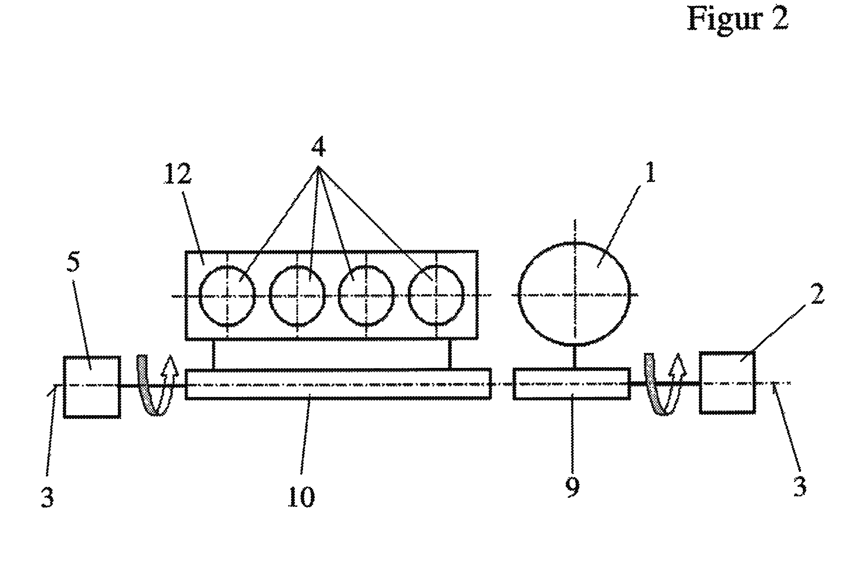

Bei dem Beleuchtungssystem nach Figur 2 ist der Frontscheinwerfer 1 auf einem Trägerteil 9 befestigt. Der Frontscheinwerfer 1 ist an dem Trägerteil 9 durch eine Einstellvorrichtung (nicht dargestellt) um eine horizontale und vertikale Achse justierbar. Das Trägerteil 9 kann von einem Teil des Frontscheinwerfers 1 selber gebildet sein und ist durch einen fernbetätigbaren Leuchtweitesteller 2 um eine horizontale Achse 3 schwenkbar, Die Leuchtmittel 4 sind zu einem Funktionsblock 12 zusammengefasst, der an einem eigenen Trägerteil 10 befestigt ist. Die Leuchtmittel 4 können auch einzeln an dem Trägerteil 10 befestigt sein. Die Leuchtmittel 4 sind zueinander genau ausgerichtet, um eine Lichtfigur mit einer gemeinsamen Hell-Dunkel-Grenze zu erzeugen. Die Justierung kann durch zwischen den Leuchtmitteln 4 und dem Funktionsblock 12 oder Trägerteil 10 bestehenden Einstelleinrichtungen (nicht dargestellt) erfolgen. Die Justage kann durch eine Montagevorrichtung der Leuchtmittel 4 erfolgen, die beim Aufsetzen der Leuchtmittel 4 auf das Trägerteil 10 diese zueinander ausrichten. In der ausgerichteten Lage können die Leuchtmittel 4 zum Beispiel durch Löten, Kleben oder Schweißen an dem Trägerteil 10 befestigt werden. Das Trägerteil 10 ist durch einen fernbetätigbaren Leuchtweitesteller 5 um eine horizontale Achse 3 verstellbar, Die Leuchtmittel 4 können durch eine nicht dargestellte Einstelleinrichtung zu dem Frontscheinwerfer 1 ausgerichtet werden.

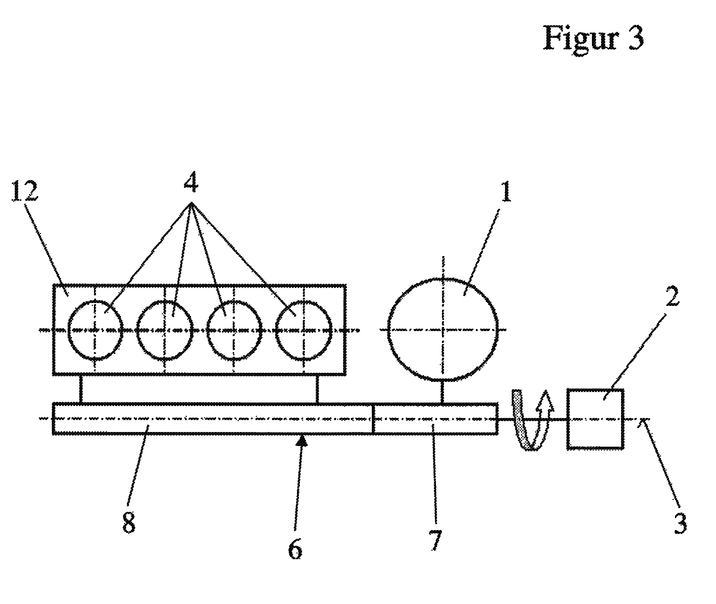

Das Beleuchtungssystem nach Figur 3 unterscheidet sich gegenüber dem nach Figur 2 durch folgendes. Die leuchtmittel 4 und der Frontscheinwerfer 1 sind an einem gemeinsamen Trägerelement 6 befestigt. Das Trägerelement 6 ist aus zwei Trägerabschnitten 7 und 8 zusammengesetzt. Zur Verstellung des Trägerelements 6 ist nur ein einziger Leuchtweitesteller 2 notwendig, Außerdem ist für das Trägerelement 6 nur eine einzige nicht dargestellte Ausrichteinrichtung notwendig. Die Ausrichteinrichtung verbindet das Trägerelement 6 mit dem nicht dargestellten Gehäuse des Beleuchtungssystems. Die beiden Trägerabschnitte 7 und 8 sind durch eine nicht dargestellte Justiereinrichtung zueinander ausrichtbar. Die Leuchtmittel 4 sind zu einem Funktionsblock 12 zusammengefasst. Die Leuchtmittel 4 können auch einzeln an dem Trägerabschnitt 8 befestigt sein.

### Bezugszeichenliste

- 1.: Frontscheinwerfer
- 2.: Leuchtweitesteller
- 3.: Achse
- 4.: Leuchtmittel
- 5.: Leuchtweitesteiler
- 6.: Trägerelement
- 7.: Trägerabschnitt
- 8.: Trägerabschnitt
- 9.: Trägerteil
- 10.: Träserie!!
- 11.: Abschlussscheibe,
- 12.: Funktionsblock

## Patentansprüche

1. Beleuchtungssystem für Fahrzeuge mit einem Frontscheinwerfer (1) für mindestens ein Hauptlichtbündel, mit einem fernbetätigbaren Leuchtweitesteller (2), durch den der Frontscheinwerfer (1) um eine Achse (3) vertikal schwenkbar ist, und mit Leuchtmitteln (4) zur Erzeugung unterschiedlicher und zur Ergänzung des Hauptlichtbündels dienenden Kurvenlichtbündel, **dadurch gekennzeichnet, dass** die Leuchtmittel (4) zur Erzeugung unterschiedlicher Kurvenlichtbündel durch einen fernbetätigbaren Leuchtweitesteller (2 oder 5) um eine Achse (3) vertikal schwenkbar sind.

2. Beleuchtungssystem nach Anspruch 1, **dadurch gekennzeichnet, dass** die Kurvenlichtbündel der Leuchtmittel (4) eine Hell-Dunkel-Grenze aufweisen, die bei jedem Schwenkwinkel der Leuchtmittel (4) auf ein und demselben Niveau des Hauptlichtbündels verläuft.

3. Beleuchtungssystem nach Anspruch 1 oder 2, **dadurch gekennzeichnet, dass** die Hell-Dunkel-Grenze der Kurvenlichtbündel auf oder unterhalb dem Niveau einer Hell-Dunkel-Grenze des Hauptlichtbündels verläuft.

4. Beleuchtungssystem nach einem der Ansprüche 1 bis 3, **dadurch gekennzeichnet, dass** der fernbetätigbare Leuchtweitesteller (2) für den Frontscheinwerfer (1) und die Leuchtmittel (4) ein und derselbe ist.

5. Beleuchtungssystem nach einem der Ansprüche 1 bis 4, **dadurch gekennzeichnet, dass** die Leuchtmittel (4) für die Kurvenlichtbündel zueinander ausgerichtet oder einstellbar sind.

6. Beleuchtungssystem nach einem der Ansprüche 1 bis 5, **dadurch gekennzeichnet, dass** die Leuchtmittel (4) zu dem Frontscheinwerfer (1) ausgerichtet oder einstellbar sind.

7. Beleuchtungssystem nach einem der Ansprüche 1 bis 6, **dadurch gekennzeichnet, dass** der Frontscheinwerfer (1) und die Leuchtmittel (4) auf einem gemeinsamen Trägerelement (6) angebracht sind, der mittels eines einzigen Leuchtweitestellers (2) vertikal schwenkbar ist.

8. Beleuchtungssystem nach Anspruch 7, **dadurch gekennzeichnet, dass** das Trägerelement (6) einem den Frontscheinwerfer (1) tragenden ersten Trägerabschnitt (7) und einem die Leuchtmiftel (4) tragenden zweiten. Trägerabschnitt (8) besteht.

9. Beleuchtungssystem nach Anspruch 8, **dadurch gekennzeichnet, dass** der die Leuchtmittel tragende Trägerabschnitt (8), im Verlauf einem bogenförmigen Abschnitt einer Abschlussscheibe des Beleuchtungssystems angepasst ist.

10. Beleuchtungssystem nach einem der Ansprüche 1 bis 9, **dadurch gekennzeichnet, dass** die Leuchtmittel (4) bei an das Fahrzeug angebauten Beleuchtungssystem ausgehend vom Fronscheinwerfer (1) zur Fahrzeugau-Senseite hin angeordnet sind.

11. Beleuchtungssystem nach einem der vorstehenden Ansprüche, **dadurch gekennzeichnet, dass** die Leuchtmitte.1 (4) für die Kurvenlichtbündel von Leuchtdioden gebildet sind und ein die. Leuchtdioden tragender Abschnitt des Trägerelement (6) von einem Kühlkörper gebildet ist

12. Beleuchtungssystem nach Anspruch 11, **dadurch gekennzeichnet, dass** der Kühlkörper auf seher Rückseite Kühlrippen aufweist und auf seiner Vorderseite eine Sammeloptik für die Uchtstrahlen der Leuchtdioden trägt.

13. Beleuchtungssystem nach einem der vorstehenden Ansprüche, **dadurch gekennzeichnet, dass** vier Leuchtmittel (4) für die unterschiedlichen Kurvenlichtbündel bestehen,

14. Beleuchtungssystem nach einem der vorstehenden Ansprüche 1 bis 13, **dadurch gekennzeichnet, dass** der Frontscheinwerfer (1) auf einem separaten Trägerelement (7) und die Leuchtmittel (4) auf einem separaten Trägerelement (8) angeordnet sind, wobei beide Trägerelemente (7 und 8) jeweils durch einen fernbetätigbaren Leuchtweitersteller (2 bzw. 3) verstellbar sind.

15. Beleuchtungssystem nach Anspruch 14, **dadurch gekennzeichnet, dass** eine elektrische Steuer- und Sensoreinrichtung vorgesehen ist, durch die Gegenverkehr auswertbar ist und entsprechend eines Steuersignals beide Leuchtweitesteller (2 bzw. 4) verstellbar sind, wobei Schwenkwinkel von dem Frontscheinwerfer (1) und den Leuchtmitteln (4) individuen ermittelt sind.

16. Beleuchtungssystem nach einem der Ansprüche 1 bis. 1.3. **dadurch gekennzeichnet, dass** eine elektrische Steuer- und Sensoreinrichtung vorgesehen ist, durch die Gegenverkehr auswertbar ist und entsprechend eines Steuersignals ein Leuchtweitesteller (2 bzw. 3) verstellbar ist.

17. Beleuchtungseinrichtung nach einem der vorstehenden Ansprüche, **dadurch gekennzeichnet, dass** der fernbetätigbare Leuchtweitesteller (2) für den Frontscheinwerfer (1) und die Leuchtmittel (4) ein und derselbe ist, wobei separate Trägerteile (9 und 10) für den Frontscheinwerfer (1) und die Leuchtmittel (4) durch eine Mitnahmevorrichtung gekoppelt sind, durch die die eine Schwenkbewegung von einem Trägerteil (9 oder 10) auf das andere übertragbar ist.

18. Beleuchtungseinrichtung nach einem der vorstehenden Ansprüche, **dadurch gekennzeichnet, dass** der fernbetätigbare Leuchtweitesteller (2) für den Frontscheinwerfer (1) und die Leuchtmittel (4) ein und derselbe ist, wobei der Leuchtweitesteller (2) durch eine. Verbindungsvorrichtung sowohl mit einem separaten Trägerteil (9) des Frontscheinwerfers (1) als auch mit einem separaten Trägerteil (10) der Leuchtmittel (4) verbunden ist.
